# EUROPÄISCHE PATENTSCHRIFT

(11) **EP 2 692 956 B1**
(45) Veröffentlichungstag und Bekanntmachung des Hinweises auf die Patenterteilung: **28.09.2016**
(21) Anmeldenummer: 12179211.3
(22) Anmeldetag: 03.08.2012
(51) Int. Cl.: E03D 1/14, E03D 1/30

(54) **Höheneinstellbare Ablaufgarntitur**
Garniture d'écoulement réglable en hauteur
Height-adjustable drainage fitting

(43) Veröffentlichungstag der Anmeldung: 05.02.2014
(73) Patentinhaber: Geberit International AG, 8645 Jona (CH)
(72) Erfinder: Borsic, Silvo, 2342 Ruse (SI)
(74) Vertreter: Frischknecht, Harry Ralph

(56) Entgegenhaltungen:
- EP-A2- 1 428 945
- WO-A1-00/15914
- US-A1- 2003 131 403
- US-A1- 2009 025 129

## Beschreibung

### TECHNISCHES GEBIET

Die vorliegende Erfindung betrifft eine höheneinstellbare Ablaufgarnitur für einen Spülkasten nach dem Oberbegriff von Anspruch 1.

### STAND DER TECHNIK

Aus der EP 1 287 210 ist eine Ablaufgarnitur für einen Spülkasten bekannt geworden. Mit dieser Ablaufgarnitur wurden in der Praxis sehr gute Resultate erzielt. Insbesondere die Einstellung der Höhe zwischen Betätigungstaste und Spülventil hat sich als besonderen Vorteil herausgestellt. Allerdings weist die Ablaufgarnitur einen komplexen mechanischen Aufbau auf, was die Herstellung kostenintensiv macht. Aufgrund der Ausbildung der Ablaufgarnitur weist diese zudem einen erhöhten Platzbedarf auf, was bei gewissen Anwendungen negativ ist.

Auch aus der WO 2011/086452 ist eine ähnliche Ablaufgarnitur bekannt geworden. Der im Spülkasten benötigte Platzbedarf dieser Ablaufgarnitur wurde gegenüber der aus der EP 1 287 210 bekannt gewordener Ablaufgarnitur etwas verkleinert. Allerdings weist diese Ablaufgarnitur den Nachteil auf, dass das Spülventil über einen komplexen Bügelmechanismus betätigt wird, welcher einerseits anfällig auf Störungen ist und andererseits die Abmessungen der Garnitur wiederum erhöht.

Aus den Druckschriften US 2009/0025129 und US 2003/013403 sind ebenfalls Ablaufgamituren bekannt geworden.

### DARSTELLUNG DER ERFINDUNG

Ausgehend von diesem Stand der Technik liegt der Erfindung eine Aufgabe zugrunde, eine höhenverstellbare Ablaufgarnitur anzugeben, welche die Nachteile des Standes der Technik überwindet. Insbesondere soll die höheneinstellbare Ablaufgarnitur bezüglich der Aussenabmessungen vergleichsweise kompakt ausgebildet sein. Weiter soll die Höheneinstellung vergleichsweise einfach erfolgen.

Diese Aufgabe löst eine höheneinstellbare Ablaufgarnitur nach Anspruch 1. Demgemäss umfasst eine höheneinstellbare Ablaufgarnitur für einen Spülkasten ein Ablaufventilgehäuse mit einem Innenraum, ein im Innenraum gelagerten und entlang einer Betätigungsachse anhebbaren Ventilkörper zur Auslösung einer Spülung, eine auf den Ventilkörper wirkende und die Bewegung des Ventilkörpers steuernde Betätigungseinheit, die mindestens teilweise oder vollständig im Innenraum angeordnet ist, ein Betätigungsorgan, welches auf die Betätigungseinheit zur Spülauslösung wirkt, ein Betätigungselement, mit welchem das Betätigungsorgan durch den Benutzer betätigbar ist, und ein Lagerungselement mit einer Aufnahme zur Lagerung des Betätigungsorgans. Das Lagerungselement ist zur Höheneinstellung verschiebbar zum Ablaufventilgehäuse mit letzterem in Verbindung und die Aufnahme liegt beabstandet zum Ablaufventilgehäuse. Das Betätigungsorgan weist die Gestalt einer Betätigungsstange auf, welche sich aus dem Innenraum des Ablaufventils in Richtung der Betätigungsachse erstreckt und in der Höhe einstellbar ausgebildet ist.

Die beabstandete Aufnahme zur Lagerung des Betätigungsorgans hat den Vorteil, dass das Betätigungsorgan innerhalb des Spülkastens zwischen Betätigungselement und Betätigungseinheit gelagert wird, wodurch die Funktionssicherheit der Ablaufgarnitur sichergestellt wird. Durch die Ausbildung des Betätigungsorgans als Stange, welche sich aus dem Innenraum des Ablaufventils hinaus erstreckt, kann weiter eine besonders kompakte Ablaufgarnitur bereitgestellt werden.

Vorzugsweise liegt die Betätigungsstange kollinear zur Betätigungsachse, wodurch eine besonders sichere Betätigung der Betätigungseinheit erreicht wird.

Die Betätigungsstange wird in der Aufnahme des Lagerungselementes gelagert und vorteilhafterweise lagert das Lagerungselement auch das Betätigungselement.

Nach der Erfindung umfasst die Ablaufgarnitur ein am Ablaufventilgehäuse gelagertes Arretierelement, mit welchem das Lagerungselement am Ablaufventilgehäuse arretierbar ist, wobei die Arretierung insbesondere über eine Rastverbindung zwischen Arreiterelement und Lagerungselement erfolgt.

Die Betätigungsstange wird durch das Arretierelement hindurchgeführt, wobei die Betätigungsstange in Richtung der Betätigungsachse bewegbar zum Arretierelement ausgebildet ist und wobei die Betätigungsstange drehfest zum Arretierelement ausgebildet ist. Hierdurch kann eine optimale Lagerung der Betätigungsstange erzielt werden. Zudem lässt die Verschwenkung der Betätigungsstange auch die Herstellung einer Verbindung der Betätigungsstange zu anderen Elementen zu, wie beispielsweise mit der Betätigungseinheit, was nachfolgend erläutert wird.

Das Arretierelement ist in eine das Lagerungselement zum Ablaufventilgehäuse festlegende Arretierstellung und in eine Freigabestellung, in welcher das Lagerungselement zum Ablaufventilgehäuse bewegbar ist, bringbar, wobei in der Freigabestellung die Höheneinstellung zwischen Ablaufventilgehäuse und Lagerungselement ermöglicht wird.

Vorzugsweise ist in der besagten Arretierstellung die Betätigungsstange im Eingriff mit der Betätigungseinheit und in der besagten Freigabestellung ist der Eingriff zwischen Betätigungsstange und Betätigungseinheit aufgehoben, so dass die Höheneinstellung der Betätigungsstange und des Lagerungselementes ermöglicht wird. Hierbei wird die Betätigungsstange zur Betätigungseinheit verschoben.

Besonders vorteilhaft ist es dabei, wenn die Betätigungsstange in der Aufnahme derart gelagert wird, dass diese mit einem Verstellen des Lagerungselementes ebenfalls verstellt wird.

Besonders bevorzugt ist die Betätigungsstange um die Betätigungsachse verschwenkbar ausgebildet und über die besagte Verschwenkbewegung in Eingriff mit der Betätigungseinheit bringbar.

Vorzugsweise umfasst das Lagerungselement Rastmittel, insbesondere eine Verzahnung, und das Arretierelement verfügt ebenfalls über Rastmittel, wobei über die Rastmittel das Lagerungselement zum Arretierelement arretierbar bzw. verrastbar ist. Die Rastmittel des Lagerungselementes und des Arretierelementes sind in der Arretierstellung im gegenseitigen Eingriff.

Vorzugsweise umfasst die Betätigungsstange sich entlang der Betätigungsstange erstreckende Rastmittel, insbesondere eine Verzahnung, welche an der Betätigungseinheit eingreifen, so dass eine Bewegung der Betätigungsstange auf die Betätigungseinheit übertragbar ist.

Vorzugsweise umfasst die Betätigungseinheit eine Platte mit einer Öffnung zur Aufnahme der Betätigungsstange, wobei die Platte zwischen zwei benachbarte Rastmittel der Betätigungsstange zu liegen kommt und so die Bewegung von der Betätigungsstange auf die Platte übertragbar ist. Bei einer Verschwenkung von der Freigabestellung in die Arretierstellung wird also die Betätigungsstange relativ zur Platte verdreht, wodurch Teile der Platte zwischen benachbarte Rastmittel zu liegen kommen.

Vorzugsweise wird die Betätigungsstange durch eine Öffnung im Arretierelement durch das Arretierelement hindurchgeführt, wobei die Öffnung mindestens eine Ausnehmung für die Rastmittel aufweist, wobei durch das Einragen der Rastmittel in besagte Ausnehmung die drehfeste Verbindung bereistellbar ist.

Vorzugsweise verfügt das Betätigungselement über zwei Tasten für die Auslösung einer Zweimengenspülung, wobei die Zweimengspülung besonders bevorzugt über den unterschiedlichen Hub der Tasten und die entsprechende unterschiedliche Ansteuerung bzw. Funktion der Betätigungseinheit gesteuert wird.

Vorzugsweise weist das Lagerungselement in Richtung der Betätigungsachse gesehen bezüglich seiner Aussendimension im Wesentlichen den gleichen oder einen kleineren Querschnitt wie die Aussendimension des Ablaufventilgehäuses in Richtung der Betätigungsachse gesehen auf.

Das Lagerungselement umfasst einen Jochabschnitt, in welchem die Aufnahme angeordnet ist, und mindestens zwei sich vom Jochabschnitt erstreckende Lagerungsstangen umfasst, wobei die Lagerungsstangen in Führungen am Ablaufventilgehäuse gelagert sind.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Seitenansicht einer Ablaufgarnitur gemäss einer Ausführungsform der vorliegenden Erfindung;
- Fig. 2: eine perspektivische Ansicht der Ablaufgarnitur nach Figur 1;
- Fig. 3: eine Detailansicht der Ablaufgarnitur nach Figur 1 mit teilweise geschnittenen Partien;
- Fig. 4: eine perspektivische Detailansicht der Figur 2 im verrasteten Zustand; und
- Fig. 5: eine perspektivische Detailansicht der Figur 2 im freigegeben Zustand.

### BESCHREIBUNG BEVORZUGTER AUSFÜHRUNGSFORMEN

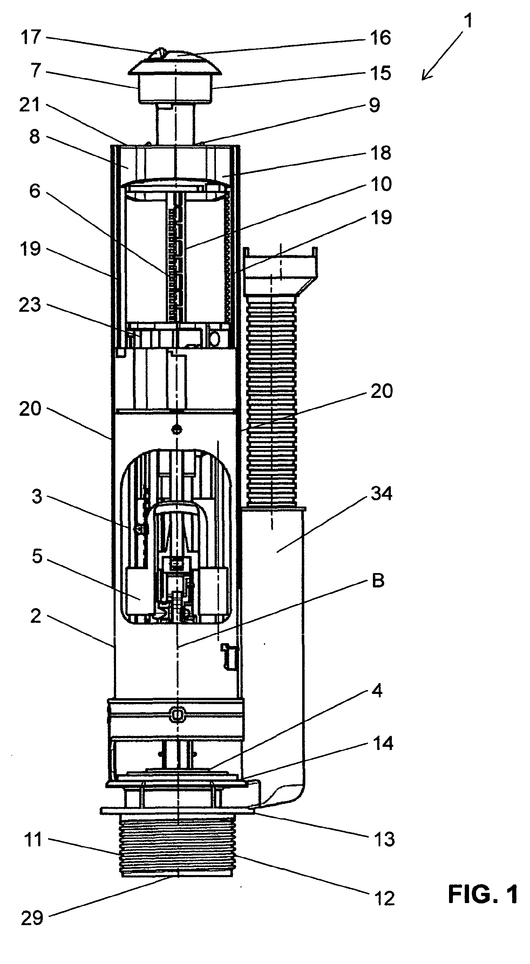

In der Figur 1 wird eine höheneinstellbare Ablaufgarnitur 1 für einen Spülkasten in einer Seitenansicht gezeigt.

Die gezeigte Ablaufgarnitur 1 umfasst ein Ablaufventilgehäuse 2 mit einem Innenraum 3, ein im Innenraum 3 gelagerten und entlang einer Betätigungsachse B anhebbaren Ventilkörper 4 zur Auslösung einer Spülung, eine auf den Ventilkörper 4 wirkende und die Bewegung des Ventilkörpers 4 steuernde Betätigungseinheit 5, ein Betätigungsorgan 6, welches zur Spülauslösung auf die Betätigungseinheit 5 wirkt, ein Betätigungselement 7, mit welchem das Betätigungsorgan 6 durch den Benutzer betätigbar ist, und ein Lagerungselement 8 mit einer Aufnahme 9 zur Lagerung des Betätigungsorgans 6. Bei einer Betätigung der Ablaufgarnitur betätigt der Benutzer das Betätigungselement 7, welches auf das Betätigungsorgan 6 wirkt. Letzteres wirkt dann auf die Betätigungseinheit 5, welche dann den Ventilkörper 4 von einer Verschlusslage in eine Spüllage bewegt und offen hält. Nach dem Abfliessen der vorgesehenen Spülwassermenge bringt die Betätigungseinheit 5 den Ventilkörper 4 von der Spüllage wieder in die Verschlusslage.

Das Lagerungselement 8 mit der Aufnahme 9 ist dabei beabstandet zum Ablaufventilgehäuse 2 angeordnet, so dass das Betätigungsorgan 6 sicher gelagert ist und dessen Bewegung gut geführt ist. Das Betätigungsorgan 6 kann dabei relativ zur Aufnahme 9 in Richtung der Betätigungsachse B bewegt werden.

Im unteren Bereich weist das Ablaufventilgehäuse 2 einen Anschlussstutzten 11 mit einer durchgehenden Auslassöffnung 29 auf. Über den Anschlussstutzen 11 ist die Ablaufgarnitur 1 mit der Auslassöffnung eines hier nicht dargestellten Spülkastens verbindbar. Der Anschlussstutzen 11 weist hierfür in der vorliegenden Ausführungsform ein Gewinde 12, dem sich ein Flansch 13 anschliesst, auf. Das Gewinde 12 ist mit einer nicht gezeigten Gewindemutter gegen die Aussenseite des Spülkastens geklemmt. Der Flansch 13 liegt dann auf der Innenseite des Spülkastens.

Weiter weist die Ablaufgarnitur 1 hier einen Ventilsitz 14 auf, auf welchem der Ventilkörper 4 aufliegt. Während des Spülvorgangs ist der Ventilkörper 4 vom Ventilsitz 14 anhebbar, sodass das Spülwasser aus dem Spülkasten über die Auslassöffnung 29 im Anschlussstutzen 11 entnehmbar ist. Der Ventilkörper 4 ist durch die Betätigungseinheit 5 ausgehend vom Ventilsitz 14 von einer Verschlusslage in eine Spüllage und wieder zurück bewegbar.

Die vorliegende Ablaufgarnitur 1 ist dabei in der Höhe einstellbar ausgebildet, sodass die Ablaufgarnitur 1 in verschiedenen Spülkästen einsetzbar ist. Vorzugsweise wird die Ablaufgarnitur 1 in Spülkästen aus Keramik eingesetzt. Gerade solche Spülkästen weisen üblicherweise eine grosse Toleranz auf, weshalb die Höhenverstellung äusserst vorteilhaft ist. Unter der Höhenverstellung wird hierin verstanden, dass die Höhe der Ablaufgarnitur 1 verändert werden kann. Insbesondere wird dabei die Distanz zwischen dem Betätigungselement 7 und dem Flansch 13 bzw. dem Ventilkörper 4 entsprechend eingestellt. Somit lässt sich die vorliegende Ablaufgarnitur 1 universal einsetzen.

In der in Figur 1 gezeigten Ausführungsform sind im Wesentlichen zwei Elemente bzgl. dem Ablaufventilgehäuse 2 in der Höhe einstellbar. Einerseits kann das Lagerungselement 8 auf der Bewegungsachse B zum Ablaufventilgehäuse 2 verschoben werden. Die Distanz zwischen dem Lagerungselement 8 und den Ablaufventilgehäuse 2 wird somit eingestellt, wodurch sich auch die Gesamthöhe der Ablaufgarnitur 1 entsprechend verändert. Andererseits wird auch das Betätigungsorgan 6 in seiner Höhe verändert bzw. kann eingestellt werden. Durch eine Veränderung des Betätigungsorgans 6 wird sichergestellt, dass eine Betätigung auf das Betätigungselement 7 auf die Betätigungseinheit 5 weitergegeben wird.

Das Betätigungsorgan 6 weist in der vorliegenden Ausführungsform die Gestalt einer Betätigungsstange 10 auf. Die Betätigungsstange 10 erstreckt sich dabei vom Innenraum 3 des Ablaufventilgehäuses 2 aus dem Ablaufventilgehäuse 2 hinaus, was die Ablaufgarnitur 1 besonders kompakt macht. Zudem ist aufgrund der Lagerung der Betätigungsstange 10 innerhalb der Ablaufgarnitur 1, diese weniger anfällig auf Defekte, welche bspw. durch Wartungsarbeiten im Inneren des Spülkastens herrühren könnten.

Besonders bevorzugt liegt die Betätigungsstange 10 wie in den Figuren gezeigt kollinear zur Betätigungsachse B und ist, wie oben bereits erläutert, in der Höhe bezüglich des Ablaufventilgehäuses 2 bzw. der darin gelagerten Betätigungseinheit 5 einstellbar ausgebildet. Die Anordnung der Betätigungsstange 10 kollinear zur Betätigungsachse B hat den Vorteil, dass nicht nur eine äusserst kompakte Ablaufgarnitur 1 bereitgestellt werden kann, sondern zudem eine sichere Betätigung auf die Betätigungseinheit gewährleistet wird.

Mit anderen Worten kann auch gesagt werden, dass die Betätigungsstange 10 innerhalb eines virtuellen Zylinders, welcher durch die Aussenwand des Ablaufventilgehäuses 2 definiert wird, angeordnet ist. Folglich sind keine Teile für die Betätigung der Ablaufgarnitur 1 ausserhalb dieses virtuellen Zylinders vorhanden, welche die Aussendimensionen vergrössern würden.

In der Figur 1 sind auch Teile einer beispielhaften Betätigungseinheit 5 gezeigt. Die Betätigungseinheit 5 wirkt auf den Ventilkörper 4 und steuert die Bewegung des Ventilkörpers 4 von der Verschlusslage in die Spüllage und zurück. Solche Betätigungseinheiten 5 sind aus dem Stand der Technik bekannt. In der vorliegenden Ausführungsform wird vorzugsweise eine Betätigungseinheit 5 eingesetzt, welche eine Bewegung des Betätigungsorganes 6 gegen den Ventilkörper 4 in eine entgegengesetzte Richtung umlenkt. Weiter umfasst die Betätigungseinheit 5 Schwimmer und/oder Gewichtselemente, welche bei Erreichen eines vorbestimmten Füllstandes im Spülkasten den Ventilkörper 4 von der Spüllage in die Verschlusslage auf dem Ventilsitz 14 zurückbewegen.

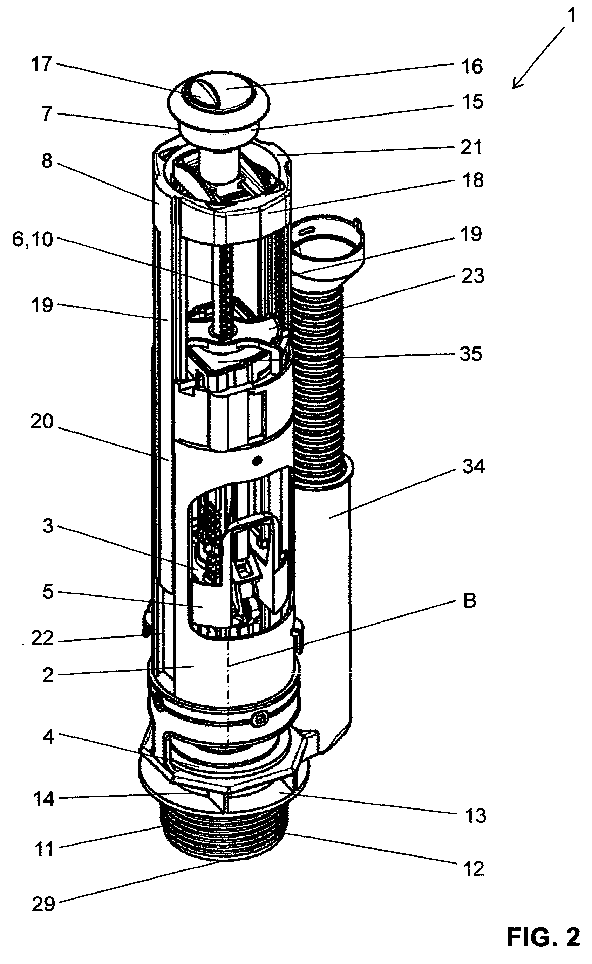

Die Betätigungsstange 10 steht hier mit einer der Betätigungseinheit 5 zugeordneten Platte 35 in Verbindung. Dies wird in Figur 2 gezeigt. Über diese Platte 35 wird die Bewegung der Betätigungsstange 10 auf die Betätigungseinheit 5 gebracht.

Das Betätigungselement 7 weist in der vorliegenden Ausführungsform zwei Betätigungstasten 16, 17 auf. Die grosse Betätigungstaste 16 dient dabei der Auslösung einer Vollmengenspülung, während die kleine Betätigungstaste 17 der Auslösung einer Teilmengenspülung dient. Vorzugsweise ist dabei die Betätigungseinheit 5 höhengesteuert ausgebildet. Bei einer Betätigung der grossen Betätigungstaste 16 legt das Betätigungsorgan 6 einen anderen Weg zurück als bei der Betätigung der kleinen Betätigungstaste 17, wodurch die Betätigungseinheit 5 unterschiedlich angesteuert wird. Dadurch hält die Betätigungseinheit 5 den Ventilkörper 4 unterschiedlich lange in der Spüllage, was die Teilmengenspülung und die Vollmengenspülung erlaubt. Typischerweise werden hierfür Schwimmer und/oder Gewichte in unterschiedlichen Höhen der Betätigungseinheit 5 zugeschaltet oder überbrückt.

Das Betätigungselement 7 weist weiter eine Mantelfläche 15 auf, mit welcher das Betätigungselement 7 im Deckel eines Spülkastens lagerbar ist.

Das Lagerungselement 8 weist vorzugsweise in Richtung der Betätigungsachse B gesehen bezüglich seiner Aussendimension einen im Wesentlichen gleichen oder einen kleinerem Querschnitt auf, als die Aussendimension des Ablaufventilgehäuses 2 in gleiche Richtung gesehen. Hierdurch kann eine besonders kompakte Struktur geschaffen werden.

Das Lagerungselement 8 umfasst in der vorliegenden Ausführungsform einen Jochabschnitt 18, der im Wesentlichen rechtwinklig zur Betätigungsachse B liegt. Weiter umfasst das Lagerungselement 8 zwei sich vom Jochabschnitt 18 erstreckende Lagerungsstangen 19. Die Lagerungsstangen 19 verlaufen dabei parallel zur Betätigungsachse B. Die Lagerungsstangen 19 sind dabei in Führungen 20 am Ablaufventilgehäuse 2 gelagert. Im Jochabschnitt 18 ist zudem die besagte Aufnahme 9 zur Führung des Betätigungsorgans 6 bzw. der Betätigungsstange 10 angeordnet.

Zudem weist der Jochabschnitt 18 hier eine obere Oberfläche 21 auf, auf welchem die Unterseite einen Spülkastendeckels gelagert werden kann bzw. aufliegen kann. Durch diese Auflage wird die Ablaufgarnitur 1 im Spülkasten gesichert.

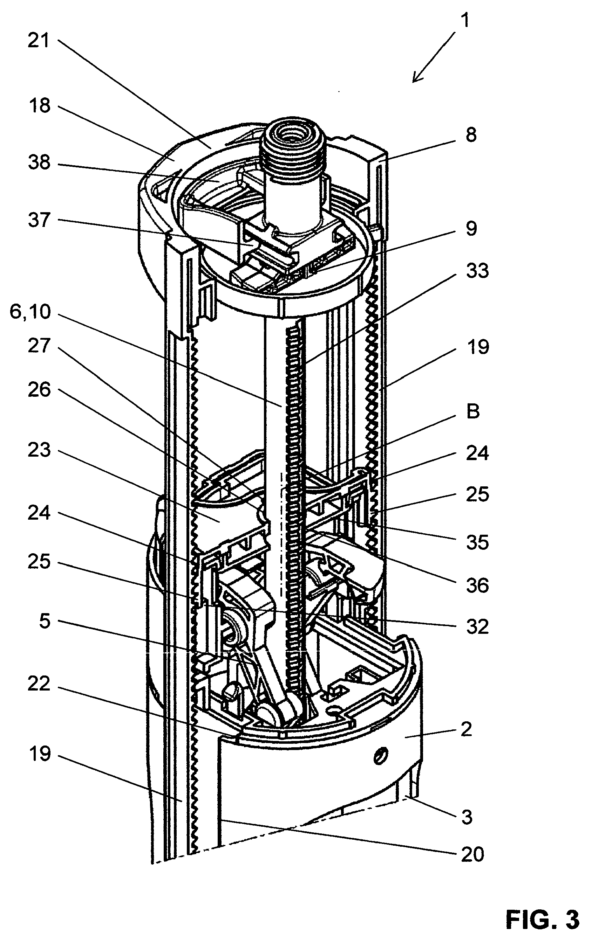

In den Figuren 2 und 3 kann gut erkannt werden, dass die Führungen 20 am Ablaufventilgehäuse 2 die Gestalt einer T-Nut 22 aufweisen. Die Lagerungsstangen 19 sind dabei komplementär bzw. passend zu dieser T-Nut 22 ausgebildet. Bei einer Höheneinstellung werden die Lagerungsstangen 19 relativ zum Ablaufventilgehäuse 2 in der T-Nut 22 verschoben. Bei einer Verringerung der Höhe werden die Lagerungsstangen 19 in die T-Nut 22 eingeschoben und bei einer Vergrösserung der Höhe werden die Lagerungsstangen 19 aus der T-Nut 22 ausgezogen.

Weiter kann in der Figur 2 gut erkannt werden, dass die Ablaufgarnitur 1 ein am Ablaufventilgehäuse 2 gelagertes Arretierelement 23 umfasst. Das Arretierelement 23 ist bezüglich einer Bewegung in Richtung Betätigungsachse B am Ablaufventilgehäuse 2 festgelegt. Das Arretierelement 23 dient der Bereitstellung einer Arretierung zwischen Lagerungselement 8 und dem Ablaufventilgehäuse 2. Hier wird die Rastverbindung über Rastelemente 24, 25 zwischen den Lagerungsstangen 19 und dem Arretierelement 23 bereitgestellt.

Die Betätigungsstange 10 wird vorzugsweise derart durch das Arretierelement 23 hindurchgeführt, so dass die Betätigungsstange 10 in Richtung der Betätigungsachse B bewegbar zum Arretierelement 23 ausgebildet ist, und dass die Betätigungsstange 10 drehfest zum Arretierelement 23 ausgebildet ist. Folglich wird also eine Bewegung in Richtung der Betätigungsachse B zwischen Arretierelement 23 und Betätigungsstange 10 erlaubt, während eine Verdrehung um die Betätigungsachse B verhindert wird. Die Bewegung der Betätigungsstange 10 zum bzgl. des Ablaufventilgehäuses 2 feststehenden Arretierelemente 23 hat den Vorteil, dass die Höhe der Betätigungsstange 10 einfach veränderbar ist. Zudem wirkt das Arretierelement auch als Führung für die Stange 10.

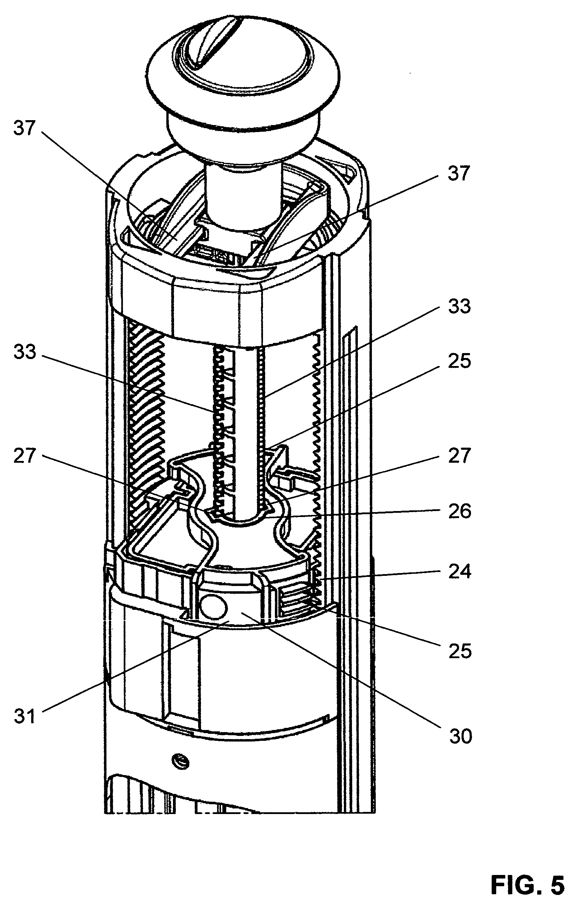

In der Figur 3 wird das Arretierelement in einer teilweise geschnittenen Darstellung gezeigt. Hier kann gut erkannt werden, dass das Arretierelement 23 in eine das Lagerungselement 8 zum Ablaufventilgehäuse 2 festlegende Arretierstellung bewegbar ist. In der Arretierstellung wird das Lagerungselement 8 zum Ablaufventilgehäuse 2 festgelegt und es wird keine relative Bewegung zwischen den beiden Elementen zugelassen. Das Arretierelement 23 ist über eine Verschwenkbewegung um die Betätigungsachse B von der Arretierstellung in eine Freigabestellung bringbar. Diese Freigabestellung wird in der Figur 5 gezeigt. In dieser Freigabestellung wird eine Bewegung zwischen den Lagerungselement 8 und beim Ablaufventilgehäuse 2 ermöglicht, sodass die Höheneinstellung zwischen Ablaufventilgehäuse 2 und Lagerungselement 8 zugelassen wird. Nach erfolgter Höheneinstellung wird das Arretierelement 23 durch den Installateur wieder in die Arretierstellung bewegt.

In der besagten Arretierstellung ist die Betätigungsstange 10 im Eingriff mit der Betätigungseinheit 5. Folglich ist in der Arretierstellung eine Bewegungsübertragung von dem Betätigungselement 7 über das Betätigungsorgan 6 bzw. Betätigungsstange 10 auf die Betätigungseinheit 5 möglich. In der Freigabestellung ist der Eingriff zwischen Betätigungsstange 10 und Betätigungseinheit 5 aufgehoben, sodass die Höheneinstellung der Betätigungsstange 10 ermöglicht wird. Hierdurch wird die Betätigungsstange 10 relativ zur Betätigungseinheit 5, welche bzgl. der Höhe im Wesentlichen ortsfest innerhalb des Ablaufventilgehäuses 2 angeordnet ist, verschoben.

Dies hat den Vorteil, dass durch eine einzige Betätigung des Arretierelementes 23 die Arretierung zwischen der Betätigungseinheit 5 und der Betätigungsstange 10 sowie der Eingriff des Lagerungselementes 8 und des Ablaufventilgehäuses 2 herstellbar bzw. aufhebbar ist. Hierdurch kann die Höheneinstellung äusserst einfach erfolgen.

Vorzugsweise weist mindestens eine der Lagerungsstangen 19 mehrere Rastmittel, insbesondere eine Verzahnung 24, auf. Das Arretierelement 23 verfügt ebenfalls über Rastmittel 25. Über diese Rastmittel 24 ist das Lagerungselement 8 zum Arretierelement 23 und somit auch zum Ablaufventilgehäuse 2 verrastbar. Diese Verrastung kann in der Figur 3 und 5 gut erkannt werden. Mehrere Zähne des Rastmittels 25 des Arretierelements 23 greifen dabei in mehrere Zähne der Rastmittel 24 der Lagerungsstangen 19 ein.

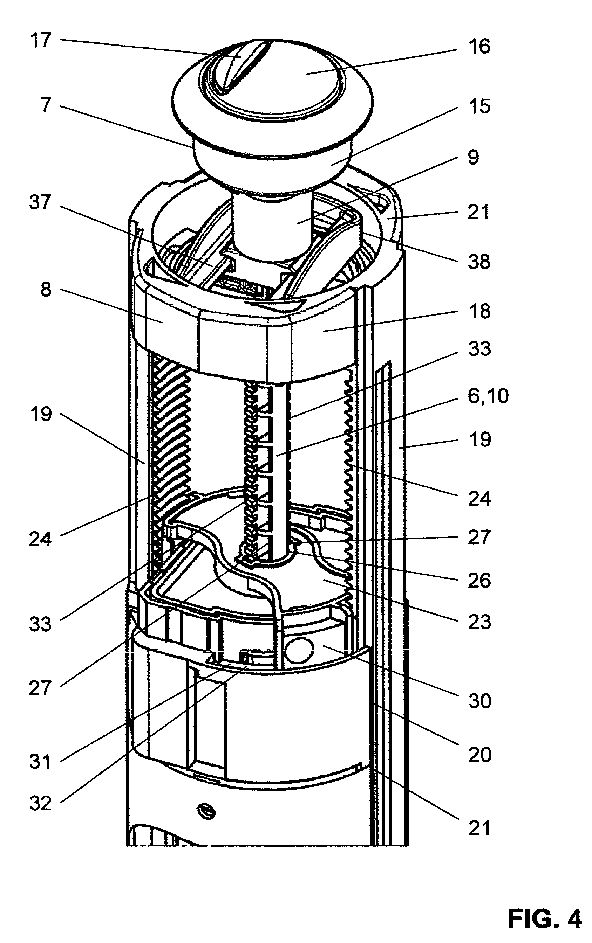

Von den Figuren 4 und 5 ist weiter ersichtlich, dass das Arretierelement 23 zum feststehenden Ablaufventilgehäuse 2 verschwenkbar ausgebildet ist. Zwei am Arretierelement 23 angeformte Laschen 30 ragen in Führungen 31 ein. Über diese Laschen 30 steht das Arretierelement 23 zudem auf einer Fläche 32 am Ablaufventilgehäuse 2 auf. Über die Fläche 32 kann eine auf das Lagerungselement in Richtung der Betätigungsachse wirkende Kraft auf das Ablaufventilgehäuse übertragen werden. Eine solche Kraft wirkt beispielsweise vom Deckel des Spülkastens.

Wenn die Rastmittel 25 des Arretierelements 23 sich nicht im Eingriff mit den Rastmittel 24 der Lagerungsstangen 19 befinden, ist das Arretierelement 23 in der Freigabestellung. Der Eingriff zwischen den beiden Rastmitteln wird also aufgehoben und die Lagerungsstange 19 kann zum Ablaufventilgehäuse 2 relativ verschoben werden. Weiter wird in der Freigabestellung, wie in der Figur 5 gezeigt, auch die als Betätigungsorgan 6 bzw. Betätigungsstange 10 um die Betätigungsachse verschwenkt. Hier wird dann der Eingriff zwischen der Betätigungsstange 10 und Betätigungseinheit 5 wie oben beschrieben entsprechend aufgehoben und die Betätigungsstange 10 kann zusammen mit dem Lagerungselement 8 entsprechend zum Ablaufventilgehäuse 2 zum Zweck der Höheneinstellung verschoben werden.

Die Betätigungsstange 10 weist, wie in den Figuren 3 bis 5 gezeigt, sich entlang der Betätigungsstange 10 bzw. der Betätigungsachse B erstreckende Rastmittel 33 auf. Die Rastmittel 33 haben insbesondere die Gestalt einer Verzahnung, welche beidseitig bzgl. der Betätigungsachse B gegenüberliegend zueinander angeordnet sind und sich von der Oberfläche der Betätigungsstange 10 weg erstrecken. Über diese Verzahnung steht die Betätigungsstange 10 mit einer Platte 35 der Betätigungseinheit 5 in Verbindung. Die Platte 35 umfasst eine Öffnung 36, durch welche die Betätigungsstange 10 durch die Platte 35 hindurchgeführt wird. Von der Öffnung 36 erstrecken sich hier nicht dargestellte Ausnehmungen. Durch ein Verschwenken der Betätigungsstange 10 zur feststehenden Platte 35 kommt die Verzahnung in den Bereich der Ausnehmung zu liegen, so dass eine Bewegung zwischen Platte 35 und Stange 10 erlaubt wird. Zudem ragt die Platte 35 in der Arretierstellung zwischen zwei benachbarte Rastmittel 33 ein, so dass Stange 10 mit der Platte 35 in Verbindung steht.

Diese Rastmittel 33 bzw. die Verzahnung greifen in entsprechende Ausnehmungen an der Betätigungseinheit 5 ein, sodass eine Bewegung der Betätigungsstange 10 entlang der Betätigungsachse B auf die Betätigungseinheit 5 übertragbar ist.

Die Verschwenkung des Betätigungsorgans 6 bzw. der Betätigungsstange 10 wird anhand der Figur 5 erläutert. Die Betätigungsstange 10 wird durch eine Öffnung 26 durch das Arretierelement 23 hindurchgeführt. Die Öffnung 26 weist hier zwei gegenüberliegend zueinander angeordnete Ausnehmungen 27 auf. Die Ausnehmungen 27 dienen der Aufnahme der Rastmittel 33 an der Betätigungsstange 10 somit wird über die Paarung Rastmittel 33 und Ausnehmung 27 die drehfeste Verbindung zwischen Betätigungsstange 10 und Arretierelemenet 23 bereitgestellt, wodurch die Drehbewegung des Arretierelementes 23 auf die Betätigungsstange 10 übertragen wird.

Mit Bezug zu den Figuren 4 und 5 kann weiter gut erkannt werden, dass das Betätigungselement 7 seitlich zur Betätigungsachse B, also in einer Ebene senkrecht zur Betätigungsachse B verschiebbar ist. Hierfür steht das Betätigungselement 7 mit Führungen 37 am Lagerungselement in Verbindung. Die Führungen 37 erlauben dabei ein Verschieben des Betätigungselementes 7. Die Führungen 37 können dabei Teil eines um die Betätigungsachse B zum Lagerungselement 7 verschwenkbaren Einstellelementes 38 sein. Folglich kann also das Betätigungselement 7 zum Lagerungselement 7 bewegt werden, so dass Fertigungstoleranzen des Spülkastens ausgleichbar sind.

Die Aufnahme 9 zur Lagerung der Betätigungsstange 10 am Lagerungselement 8 kann Teil des Betätigungselementes 7 sein und/oder direkt am Lagerungselement 8 angeformt sein.

Seitlich zur Ablaufgarnitur ist weiter ein Überlauf 34 angeordnet, über welchen bei einem Defekt des Füllventils Wasser aus dem Spülkasten weggeführt werden kann. Der Überlauf 34 mündet zwischen Ventilsitz 14 und Auslassöffnung 29 in den Auslass und kann in seiner Höhe verändert werden.

**BEZUGSZEICHENLISTE**

| | | | |
|---|---|---|---|
| 1 | Ablaufgarnitur | 23 | Arretierelement |
| 2 | Ablaufventilgehäuse | 24 | Rastmittel, Verzahnung |
| 3 | Innenraum | 25 | Rastmittel |
| 4 | Ventilkörper | 26 | Öffnung |
| 5 | Betätigungseinheit | 27 | Ausnehmungen |
| 6 | Betätigungsorgan | 29 | Auslassöffnung |
| 7 | Betätigungselement | 30 | Laschen |
| 8 | Lagerungselement | 31 | Führungen |
| 9 | Aufnahme | 32 | Fläche |
| 10 | Betätigungsstange | 33 | Rastmittel |
| 11 | Anschlussstutzen | 34 | Überlauf |
| 12 | Gewinde | 35 | Platte |
| 13 | Flansch | 36 | Öffnung |
| 14 | Ventilsitz | 37 | Führungselement |
| 15 | Mantelfläche | 38 | Einstellelement |
| 16 | Betätigungstaste | | |
| 17 | Betätigungstaste | | |
| 18 | Jochabschnitt | | |
| 19 | Lagerungsstangen | | |
| 20 | Führungen | | |
| 21 | obere Oberfläche | | |
| 22 | T-Nut | | |

## Patentansprüche

1. Höheneinstellbare Ablaufgarnitur (1) für einen Spülkasten umfassend ein Ablaufventilgehäuse (2) mit einem Innenraum (3),
ein im Innenraum (3) gelagerten und entlang einer Betätigungsachse (B) anhebbarer Ventilkörper (4) zur Auslösung einer Spülung,
eine auf den Ventilkörper (4) wirkende und die Bewegung des Ventilkörpers (4) steuernde Betätigungseinheit (5), die im Innenraum (3) angeordnet ist,
ein Betätigungsorgan (6), welches auf die Betätigungseinheit (5) zur Spülauslösung wirkt,
ein auf das Betätigungsorgan wirkendes Betätigungselement (7), mit welchem das Betätigungsorgan (6) durch den Benutzer betätigbar ist, und
ein Lagerungselement (8) mit einer Aufnahme (9) zur Lagerung des Betätigungsorgans (6), wobei das Lagerungselement (8) zur Höheneinstellung verschiebbar zum Ablaufventilgehäuse (1) mit letzterem in Verbindung steht und die Aufnahme (9) beabstandet zum Ablaufventilgehäuse (2) liegt, wobei
das Betätigungsorgan (6) die Gestalt einer Betätigungsstange (10) aufweist, welche sich aus dem Innenraum (3) des Ablaufventilgehäuses (2) in Richtung der Betätigungsachse (B) erstreckt und in der Höhe einstellbar ausgebildet ist, **dadurch gekennzeichnet,**
**dass** die Ablaufgarnitur (1) ein am Ablaufventilgehäuse (2) gelagertes Arretierelement (23) umfasst, mit welchem das Lagerungselement (8) am Ablaufventilgehäuse (2) arretierbar ist und
**dass** die Betätigungsstange (10) durch das Arretierelement (23) hindurchgeführt ist, wobei die Betätigungsstange (10) in Richtung der Betätigungsachse (B) bewegbar zum Arretierelement (23) ausgebildet ist und wobei die Betätigungsstange (10) drehfest zum Arretierelement (23) ausgebildet ist.

2. Ablaufgarnitur nach Anspruch 1, **dadurch gekennzeichnet, dass** die Betätigungsstange (10) kollinear zur Betätigungsachse (B) liegt.

3. Ablaufgarnitur nach Anspruch 1 oder 2, **dadurch gekennzeichnet, dass** die Arretierung über eine Rastverbindung erfolgt.

4. Ablaufgarnitur nach einem der vorhergehenden Ansprüche, dass das Arretierelement (23) in eine das Lagerungselement (10) zum Ablaufventilgehäuse (2) festlegende Arretierstellung und in eine das Lagerungselement (8) zum Ablaufventilgehäuse (2) Freigabestellung bringbar ist, wobei in der Freigabestellung die Höheneinstellung zwischen Ablaufventilgehäuse (2) und Lagerungselement (8) ermöglicht wird.

5. Ablaufgarnitur nach Anspruch 4, **dadurch gekennzeichnet, dass** in der besagten Arretierstellung die Betätigungsstange (10) im Eingriff mit der Betätigungseinheit (5) ist und dass in der besagten Freigabestellung der Eingriff zwischen Betätigungsstange (10) und Betätigungseinheit (5) aufgehoben ist, so dass die Höheneinstellung der Betätigungsstange (10) und des Lagerungselementes (8) zum Ablaufventilgehäuse (2) ermöglicht wird, wobei die Betätigungsstange (10) vorzugsweise um die Betätigungsachse (B) verschwenkbar ausgebildet ist und über die Verschwenkbewegung in Eingriff mit der Betätigungseinheit (5) bringbar ist.

6. Ablaufgarnitur nach einem der vorhergehenden Ansprüche, **dadurch gekennzeichnet, dass** das Lagerungselement (8) über Rastmittel (24), insbesondere eine Verzahnung, verfügt, und dass das Arretierelement (23) über Rastmittel (25) verfügt, wobei über die Rastmittel (24, 25) das Lagerungselement (10) zum Arretierelement (23) arretierbar bzw. verrastbar ist.

7. Ablaufgarnitur nach einem der vorhergehenden Ansprüche, **dadurch gekennzeichnet, dass** die Betätigungsstange (10) sich entlang der Betätigungsstange (10) erstreckende Rastmittel (33), insbesondere eine Verzahnung, umfasst, welche an der Betätigungseinheit (5) eingreifen, so dass eine Bewegung der Betätigungsstange (10) auf die Betätigungseinheit (5) übertragbar ist.

8. Ablaufgarnitur nach einem der vorhergehenden Ansprüche, **dadurch gekennzeichnet, dass** die Betätigungseinheit (5) eine Platte (35) mit einer Öffnung (36) zur Aufnahme der Betätigungsstange (10) umfasst, wobei die Platte (35) im arretierten Zustand zwischen zwei benachbarte Rastmitteln (33) der Betätigungsstange (10) liegt.

9. Ablaufgarnitur nach Anspruch 7 oder 8, **dadurch gekennzeichnet, dass** die Betätigungsstange (10) durch eine Öffnung (26) im Arretierelement (23) durch das Arretierelement (23) hindurchgeführt wird, wobei die Öffnung (26) mindestens eine Ausnehmung (27) für die Rastmittel (33) aufweist, wobei durch das Einragen der Rastmittel (33) in besagte Ausnehmung (27) die drehfeste Verbindung zwischen Arretierelement (23) und Betätigungsstange (10) bereistellbar ist.

10. Ablaufgarnitur nach einem der vorhergehenden Ansprüche, **dadurch gekennzeichnet, dass** das Arretierelement (23) die Gestalt einer Scheibe aufweist und/oder dass das Arretierelement (23) um die Betätigungsachse (B) verschwenkbar ausgebildet ist.

11. Ablaufgarnitur nach einem der vorhergehenden Ansprüche, **dadurch gekennzeichnet, dass** das Betätigungselement (7) am Lagerungselement (8) in einer Ebene rechtwinklig zur Betätigungsachse (B) bewegbar gelagert ist, wobei somit Toleranzen am Spülkasten ausgleichbar sind und/oder dass das Betätigungselement (7) über zwei Tasten (16, 17) für die Auslösung einer Zweimengenspülung verfügt, wobei die Zweimengspülung vorzugsweise über den unterschiedlichen Hub der Tasten (16, 17) und die Ansteuerung der Betätigungseinheit (5) gesteuert wird.

12. Ablaufgarnitur nach einem der vorhergehenden Ansprüche, **dadurch gekennzeichnet, dass** das Lagerungselement (8) in Richtung der Betätigungsachse (B) gesehen bezüglich seiner Aussendimension im Wesentlichen den gleichen oder einen kleineren Querschnitt aufweist, wie die Aussendimension des Ablaufventilgehäuses (2) in Richtung der Betätigungsachse (B) gesehen.

13. Ablaufgarnitur nach einem der vorhergehenden Ansprüche, **dadurch gekennzeichnet, dass** das Lagerungselement (8) einen Jochabschnitt (18), in welchem die Aufnahme (9) angeordnet ist, und mindestens zwei sich vom Jochabschnitt (18) erstreckende Lagerungsstangen (19) umfasst, wobei die Lagerungsstangen (19) in Führungen (20) am Ablaufventilgehäuse (1) gelagert sind.

14. Ablaufgarnitur nach Anspruch 13, **dadurch gekennzeichnet, dass** die Führung (20) am Ablaufventilgehäuse (2) die Gestalt einer T-Nut (22) aufweist und dass die Lagerungsstangen (19) komplementär zu dieser T-Nut ausgebildet sind.

## Claims

1. An height-adjustable drain fitting (1) for a flushing tank, comprising
a drain valve housing (2) having an interior (3),
a valve body (4) that is mounted in the interior (3) and can be lifted along an actuating axis (B) so as to initiate flushing,
an actuating unit (5) that acts on the valve body (4) and controls the movement of the valve body (4), which actuating unit is arranged in the interior (3),
an actuating member (6) which acts on the actuating unit (5) so as to initiate flushing,
an actuating element (7) that acts on the actuating member and by means of which the actuating member (6) can be actuated by the user, and
a mounting element (8) having a receptacle (9) for mounting the actuating member (6), wherein the mounting element (8) is displaceable relative to the drain valve housing (2) and is connected thereto for adjusting the height, and the receptacle (9) is spaced apart from the drain valve housing (2),
wherein the actuating member (6) has the shape of an actuating rod (10) which extends out of the interior (3) of the drain valve housing (2) in the direction of the actuating axis (B) and is designed so as to be height-adjustable, **characterized**
**in that** the drain fitting (1) comprises a locking element (23) that is mounted on the drain valve housing (2) and by means of which the mounting element (8) can be locked on the drain valve housing (2), and
**in that** the actuating rod (10) is fed through the locking element (23), wherein the actuating rod (10) is designed to be movable relative to the locking element (23) in the direction of the actuating axis (B), and wherein the actuating rod (10) is designed to be rotationally fixed with respect to the locking element (23).

2. The drain fitting according to claim 1, **characterized in that** the actuating rod (10) is collinear to the actuating axis (B).

3. The drain fitting according to claim 1 or claim 2, **characterized in that** locking is carried out via a latching connection.

4. The drain fitting according to any one of the preceding claims, **characterized in that** the locking element (23) can be brought into a locking position that fixes the mounting element (10) with respect to the drain valve housing (2) and into a release position in which the mounting element (10) can be moved with respect to the drain valve housing (2), wherein in the release position, the height adjustment between the drain valve housing (2) and the mounting element (8) is possible.

5. The drain fitting according to claim 4, **characterized in that** in said locking position, the actuating rod (10) is in engagement with the actuating unit (5), and that in said release position, the engagement between the actuating rod (10) and the actuating unit (5) is released so that the height adjustment of the actuating rod (10) and the mounting element (8) with respect to the drain valve housing (2) is made possible, wherein the actuating rod (10) is preferably designed to be pivotable about the actuating axis (B) and can be brought into engagement with the actuating unit (5) via the pivoting movement.

6. The drain fitting according to any one of the preceding claims, **characterized in that** the mounting element (8) comprises latching means (24), in particular a tooth system, and that the locking element (23) comprises latching means (25), wherein the mounting element (10) can be locked and/or latched with respect to the locking element (23) via the latching means (24, 25).

7. The drain fitting according to any one of the preceding claims, **characterized in that** the actuating rod (10) comprises latching means (33), in particular a tooth system, which extend along the actuating rod (10) and engage on the actuating unit (5) so that a movement of the actuating rod (10) can be transmitted to the actuating unit (5).

8. The drain fitting according to any one of the preceding claims, **characterized in that** the actuating unit (5) comprises a plate (35) with an opening (36) for receiving the actuating rod (10), wherein in the locked state, the plate (35) is positioned between two adjacent latching means (33) of the actuating rod (10).

9. The drain fitting according to claim 7 or claim 8, **characterized in that** the actuating rod (10) is fed through the locking element (23) through an opening (26) in the locking element (23), wherein the opening (26) has at least one recess (27) for the latching means (33), wherein the rotationally fixed connection between the locking element (23) and the actuating rod (10) can be provided by the latching means (33) protruding into said recess (27).

10. The drain fitting according to any one of the preceding claims, **characterized in that** the locking element (23) has the shape of a disc and/or that the locking element (23) is designed to be pivotable about the actuating axis (B).

11. The drain fitting according to any one of the preceding claims, **characterized in that** the actuating element (7) is movably mounted on the mounting element (8) in a plane perpendicular to the actuating axis (B), wherein tolerances can be compensated in this manner, and/or that the actuating element (7) has two buttons (16, 17) for initiating a dual flush, wherein the dual flush is preferably controlled via the different stroke of the buttons (16, 17) and the activation of the actuating unit (5).

12. The drain fitting according to any one of the preceding claims, **characterized in that** the mounting element (8), when viewed in the direction of the actuating axis (B), has a cross-section with regard to its outer dimension, which cross-section is substantially the same as or smaller than the outer dimension of the drain valve housing (2) when viewed in the direction of the actuating axis (B).

13. The drain fitting according to any one of the preceding claims, **characterized in that** the mounting element (8) comprises a yoke section (18) in which the receptacle (9) is arranged, and comprises at least two mounting rods (19) extending from the yoke section (18), wherein the mounting rods (19) are mounted in guides (20) on the drain valve housing (2).

14. The drain fitting according to claim 13, **characterized in that** the guide (20) on the drain valve housing (2) has the shape of a T-groove, and that the mounting rods (19) are formed complementary to this T-groove.

## Revendications

1. Une garniture d'écoulement réglable en hauteur (1) pour un réservoir de chasse d'eau comprenant un boîtier de soupape de vidange (2) avec un intérieur (3),
un corps de soupape (4) pour déclencher la chasse d'eau qui est monté dans l'intérieur (3) et qui est élevable le long d'un axe d'actionnement (B),
une unité d'actionnement (5) qui est arrangé dans l'intérieur (3) qui agit sur le corps de soupape (4) et qui contrôle le mouvement du corps de soupape (4)
un organe d'actionnement (6) qui agit sur l'unité d'actionnement (5) pour déclencher la chasse d'eau,
un élément d'actionnement (7) qui agit sur l'organe d'actionnement, avec lequel l'organe d'actionnement (6) peut être actionné par l'utilisateur, et
un élément de support (8) avec une réception (9) pour le montage de l'organe d'actionnement (6), où l'élément de support (8) est en contact mobil avec le boîtier de soupape de vidange (2) pour le réglage en hauteur et la réception (9) est espacée par rapport au boîtier de soupape de vidange (2), où
l'organe d'actionnement (6) comprend la forme d'une tige d'actionnement (10) qui s'étend à partir de l'intérieur (3) du boîtier de soupape de vidange (2) dans la direction de l'axe d'actionnement (B) et qui est réglable en hauteur, **caractérisé**
**en ce que** la garniture d'écoulement (1) comprend un verrouillage (23) qui est monté au boîtier de soupape de vidange (2), avec lequel l'élément de support (8) est blocable au boîtier de soupape de vidange (2) et
**en ce que** la tige d'actionnement (10) est guidée à travers le verrouillage (23), où la tige d'actionnement (10) est formée d'une manière mobil par rapport au verrouillage (23) dans la direction de l'axe d'actionnement (B) et où la tige d'actionnement (10) est formée d'une manière fixe en rotation par rapport au verrouillage (23).

2. La garniture d'écoulement selon la revendication 1, **caractérisé en ce que** la tige d'actionnement (10) est colinéaire à l'axe d'actionnement (B).

3. La garniture d'écoulement selon les revendications 1 ou 2, **caractérisé en ce que** le verrouillage se fait par une connexion de verrouillage.

4. La garniture d'écoulement selon l'une quelconque des revendications précédentes, **caractérisé en ce que** le verrouillage (23) peut être amené dans une position de verrouillage dans laquelle l'élément de support (8) est immobile par rapport au boîtier de soupape de vidange (2) et dans une position de libération dans laquelle l'élément de support (8) est mobile par rapport au boîtier de soupape de vidange (2), où dans la position de libération le réglage en hauteur entre le boîtier de soupape de vidange (2) et l'élément de support (8) est rendu possible.

5. La garniture d'écoulement selon la revendication 4, **caractérisé en ce que** dans ladite position de verrouillage la tige d'actionnement (10) est en prise avec l'unité d'actionnement (5) et **en ce que** dans ladite position de libération l'engagement entre la tige d'actionnement (10) et l'unité d'actionnement (5) est annulée, de sorte que la réglage en hauteur de la tige d'actionnement (10) et l'élément de support (8) par rapport au boîtier de soupape de vidange (2) est rendu possible, où la tige d'actionnement (10) est formée de préférence pivotable autour l'axe d'actionnement (B) et peut être amené en engagement avec l'unité d'actionnement (5) par un pivotement.

6. La garniture d'écoulement selon l'une quelconque des revendications précédentes, **caractérisé en ce que** l'élément de support (8) a un moyen de verrouillage (24), en particulier une denture, et **en ce que** le verrouillage (23) a un moyen de verrouillage (25), où l'élément de support (8) peut être arrêté ou verrouillé respectivement par rapport au verrouillage (23) par les moyens de verrouillage (24, 25).

7. La garniture d'écoulement selon l'une quelconque des revendications précédentes, **caractérisé en ce que** la tige d'actionnement (10) comprend des moyens de verrouillage (33) qui s'étend le long la tige d'actionnement (10), en particulier une denture, qui engage l'unité d'actionnement (5), de sorte que un mouvement de la tige d'actionnement (10) peut être transféré à l'unité d'actionnement (5).

8. La garniture d'écoulement selon l'une quelconque des revendications précédentes, **caractérisé en ce que** l'unité d'actionnement (5) comprend une plaque (35) avec une ouverture (36) pour la réception de la tige d'actionnement (10), où la plaque (35), dans l'état verrouillé, est positionnée entre deux moyens de verrouillage (33) adjacentes de la tige d'actionnement (10).

9. La garniture d'écoulement selon les revendications 7 ou 8, **caractérisé en ce que** la tige d'actionnement (10) est guidée à travers le verrouillage (23) par une ouverture (26) dans le verrouillage (23), où l'ouverture (26) comprend au moins un évidement (27) pour le moyen de verrouillage (33), où la connexion en rotation fixe entre le verrouillage (23) et la tige d'actionnement (10) peut être réalisée par l'intrusion des moyens de verrouillage (33) dans ledit évidement (27).

10. La garniture d'écoulement selon l'une quelconque des revendications précédentes, **caractérisé en ce que** le verrouillage (23) comprend la forme d'un disque et/ou **en ce que** le verrouillage (23) est pivotable autour l'axe d'actionnement (B).

11. La garniture d'écoulement selon l'une quelconque des revendications précédentes, **caractérisé en ce que** l'élément d'actionnement (7) est supporté par l'élément de support (8) d'une manière mobile dans une plane perpendiculaire à l'axe d'actionnement (B), où ainsi des tolérances au réservoir de chasse d'eau peut être compensées et/ou **en ce que** l'élément d'actionnement (7) comporte deux boutons (16, 17) pour le déclenchement d'une chasse d'eau à deux volumes, où le déclanchement de la chasse d'eau à deux volumes de préférence, est réglé par les courses différentes des boutons (16, 17) et la commande de l'unité d'actionnement (5).

12. La garniture d'écoulement selon l'une quelconque des revendications précédentes, **caractérisé en ce que** l'élément de support (8) comprend en essence la même ou une section transversale plus petite par rapport à sa dimension extérieure que la dimension extérieure du boîtier de soupape de vidange (2) vue dans la direction de l'axe d'actionnement (B).

13. La garniture d'écoulement selon l'une quelconque des revendications précédentes, **caractérisé en ce que** l'élément de support (8) comprend une section de culasse (18) dans laquelle la réception (9) est arrangée et au moins deux tiges de support (19) qui s'étends à partir de la section de culasse (18), où les tiges de support (19) sont supportées dans des guidages (20) au boîtier de soupape de vidange (2).

14. La garniture d'écoulement selon la revendication 13, **caractérisé en ce que** la guidage (20) au boîtier de soupape de vidange (2) a la forme d'une rainure T (22) et **en ce que** les tiges de support (19) sont formées complémentaires à cette rainure T.
